# EUROPÄISCHE PATENTSCHRIFT

(11) **EP 2 382 397 B1**
(45) Veröffentlichungstag und Bekanntmachung des Hinweises auf die Patenterteilung: **15.01.2014**
(21) Anmeldenummer: 09801399.8
(22) Anmeldetag: 09.12.2009
(51) Int. Cl.: F16B 39/38

(54) **MEHRTEILIGES SCHRAUBENELEMENT, SCHRAUBVERBINDUNG SOWIE VERFAHREN ZUM HERSTELLEN EINES MEHRTEILIGEN SCHRAUBENELEMENTES**
MULTIPART SCREW ELEMENT, SCREW CONNECTION, AND METHOD FOR PRODUCING A MULTIPART SCREW ELEMENT
ÉLÉMENT FILETÉ EN PLUSIEURS PARTIES, RACCORD FILETÉ ET PROCÉDÉ DE FABRICATION D'UN ÉLÉMENT FILETÉ EN PLUSIEURS PARTIES

(30) Priorität: 27.01.2009 DE 102009006327
(43) Veröffentlichungstag der Anmeldung: 02.11.2011
(73) Patentinhaber: Flaig, Hartmut, 78554 Aldingen (DE)
(72) Erfinder: Flaig, Hartmut, 78554 Aldingen (DE)
(74) Vertreter: Wagner, Kilian
(86) Internationale Anmeldenummer: PCT/EP2009/008788
(87) Internationale Veröffentlichungsnummer: WO 2010/086000

(56) Entgegenhaltungen:
- GB-A- 668 764
- GB-A- 669 698
- US-A- 4 661 031

## Beschreibung

Die Erfindung betrifft ein Schraubenelement mit einem zwei Außengewinde aufweisenden Schaft gemäß Anspruch 1, eine Schraubverbindung gemäß Anspruch 12 sowie ein Verfahren zum Herstellen eines Schraubenelementes gemäß dem Oberbegriff des Anspruchs 13.

Bei herkömmlichen Schrauben mit einem ein einziges Außengewinde aufweisenden Schaft besteht das Problem, dass sich die Schraube mit der Zeit, beispielsweise durch Betriebsschwingungen, etc. einer mit der Schraube versehenen Vorrichtung lösen kann. Dies kann sicherheitsrelevante Folgen haben.

Neben den zuvor beschriebenen einfachen Schrauben sind sogenannte, als Differenzgewindeschrauben ausgebildete Sicherungsschrauben bekannt. Schrauben mit Differenzgewinde ermöglichen ein festes Verspannen von Bauteilen, wobei beim Verschrauben der Schraube mit einem Innengewindeelement ein Bremsmoment (Sicherungsmoment, Haltemoment) resultiert, welches die Sicherungsfunktion gewährleistet. Die Entstehung des Bremsmomentes ist darauf zurückzuführen, dass die Schrauben zwei unterschiedliche Außengewinde aufweisen, die zwar die gleiche Gangrichtung, jedoch eine voneinander unterschiedliche Steigung aufweisen. Wird eine derartige Differenzgewindeschraube mit einem Innengewinde verschraubt, kommt es zu einer Verspannung der Außengewinde mit dem Innengewinde. Bei bekannten Differenzgewindeschrauben gehen die beiden Außengewinde üblicherweise unmittelbar ineinander über. Nachteilig bei den bekannten Differenzgewindeschrauben ist deren aufwendige Fertigung.

Die GB 668 764 A, die GB 669 698 A und die US 4 661 031 A offenbaren jeweils Schraubenelemente mit einem einteiligen Schaft. Bei sämtlichen Schraubenelementen ist es erforderlich, dass diese spanend bearbeitet werden, wobei eine solche Bearbeitung die Herstellung des jeweiligen Schraubenelementes aufwendig und damit kostenintensiv macht.

Aus der DE 490 889 ist eine Schraubenmutter (kein Schraubenelement) bekannt geworden, die sich selbständig gegen ein unbeabsichtigtes Lösen sichert. Hierzu weist die bekannte Schraubenmutter zwei in axialer Richtung voneinander beabstandete Innengewinde auf, wobei zwischen den Innengewinden ein umlaufender, innerer Einstich vorgesehen ist, der durch spanende Bearbeitung hergestellt ist. Die Bremswirkung ist darauf zurückzuführen, dass die beiden Innengewinde nach dem Einbringen des Einstichs axial aufeinanderzu bewegt werden, wodurch ein Innengewindesteigungssprung zwischen den Innengewinden realisiert ist, der dafür sorgt, dass sich die Innengewinde beim Verschrauben mit einem gemeinsamen Außengewindeelement im Gewindegang des Außengewindeelementes axial (etwas) verspannen. Nachteilig bei der bekannten Schraubenmutter ist, dass diese notwendigerweise mittels spanender Bearbeitung hergestellt werden muss.

Der Erfindung liegt die Aufgabe zugrunde, ein alternatives, als Sicherungsschraube verwendbares Schraubenelement anzugeben, welches auf einfache Weise fertigbar ist. Bevorzugt soll das Schraubenelement seine Sicherungsfunktion auch nach einer Vielzahl von Schraubvorgängen nicht verlieren. Daher besteht die Aufgabe darin, eine Schraubenverbindung mit mindestens einem entsprechend optimierten Schraubenelement sowie ein Verfahren zum einfachen Erstellen eines derartigen Schraubenelementes anzugeben.

Diese Aufgabe wird hinsichtlich des Schraubenelementes mit den Merkmalen des Anspruchs 1, hinsichtlich der Schraubverbindung mit den Merkmalen des Anspruchs 12 und hinsichtlich des Verfahrens zum Herstellen des Schraubenelementes mit den Merkmalen des Anspruchs 13 gelöst. Vorteilhafte Weiterbildungen der Erfindung sind in den Unteransprüchen angeben.

Der Erfindung liegt der Gedanke zugrunde, das Schraubenelement mehrteilig, vorzugsweise zweiteilig, auszubilden, derart, dass der Schraubenschaft aus mindestens zwei, vorzugsweise ausschließlich zwei, Schaftteilen zusammengesetzt ist, wobei jedes der beiden Schaftteile ein Außengewinde aufweist und beide Außengewinde derart relativ zueinander positioniert sind, dass beim gemeinsamen Verschrauben der beiden Außengewinde mit einem Innengewindeelement ein Bremsmoment (Sicherungsmoment, Haltemoment) resultiert. Anders ausgedrückt ist die Sicherungsfunktion (Bremsmoment) bei einem nach dem Konzept der Erfindung ausgebildeten Schraubenelement nicht, zumindest nicht ausschließlich, auf eine spezielle Ausgestaltung der Außengewinde als solches, sondern auf deren Relativposition zurückzuführen. Wesentlich bei dem erfindungsgemäßen Schraubenelement ist, dass die beiden, vorzugsweise, gegebenenfalls bis auf ihre Axialerstreckung, identischen Außengewinde auf die beiden Schaftteile verteilt sind, da hierdurch eine verbesserte Federwirkung des Schraubenelementes in axialer Richtung und damit ein langfristiger Erhalt der Sicherungsfunktion, auch nach einer Vielzahl von Schraubvorgängen gewährleistet werden kann. Darüber hinaus lässt sich ein nach dem Konzept der Erfindung ausgebildetes Schraubenelement sehr einfach fertigen, da die Außengewinde nach ihrem Einbringen - nicht zwingend - relativ zueinander verstellt werden müssen, um die Bremswirkung zu erzielen, sondern es ist, wie später noch erläutert werden wird, möglich und bevorzugt, die beiden Außengewinde bereits entsprechend relativpositioniert in die Schaftteile, vorzugsweise durch Rollieren mit zwei unterschiedlichen Rollierwalzenabschnitten oder zwei unterschiedlichen Rollierwalzen einzubringen. Durch ein entsprechend versetztes Einbringen der Außengewinde kann auf einfache Weise eine definierte Relativpositionierung erreicht werden, wodurch das Schraubenelement optimal in einer Massenproduktion mit einem reproduzierbaren Bremsmoment bereitgestellt werden kann. Die Fertigung wird zusätzlich dadurch erleichtert, dass die Außengewinde, gegebenenfalls bis auf ihre axiale Länge, bei einem nach dem Konzept der Erfindung ausgebildeten Schraubenelement gemäß einer bevorzugten Ausführungsform identisch ausgebildet werden können. Ganz besonders bevorzugt ist es, wenn die beiden Schaftteile derart aneinander festgelegt sind, dass ein Relatiwerdrehen in Umfangsrichtung vermieden wird. Bevorzugt sind die Schaftteile hierzu formschlüssig verbunden.

Im Hinblick auf die konkrete Ausbildung des Schraubenelementes gibt es unterschiedliche Möglichkeiten. Ganz besonders bevorzugt ist eine Ausführungsform des Schraubenelementes (Sicherungsschraube) als Kopfschraube oder als Stiftschraube, wobei es weiter bevorzugt ist, wenn die Stiftschraube in der späteren Anwendung (Verwendung) auf Druck und die Kopfschraube auf Zug beansprucht wird.

In Weiterbildung der Erfindung ist mit Vorteil vorgesehen, wenn eines der Schaftteile elastisch relativ zu dem jeweils anderen Schaftteil bewegbar bzw. auslenkbar ist, um eine optimale Verspannung des Schraubenelementes in einem Innengewindeelement zu erreichen. Die Federwirkung kann beispielsweise darauf beruhen, dass eines der Schaftteile, vorzugsweise ein endseitiges erstes Schaftteil, in der Art einer Tellerfeder wirkt und/oder ausgebildet ist. Ganz besonders bevorzugt ist die Axialerstreckung des ersten, insbesondere endseitigen Schaftteils geringer als die des zweiten Schaftteils. Noch weiter bevorzugt weist das am ersten, insbesondere endseitigen, Schaffteil vorgesehene erste Außengewinde weniger Windungen, vorzugsweise wesentlich weniger Windungen, auf als das zweite Außengewinde des zweiten Schaftteils - anders ausgedrückt unterscheiden sich die Außengewinde bevorzugt hinsichtlich ihrer Axialerstreckung. Ganz besonders bevorzugt ist es, wenn am ersten, insbesondere endseitigen, Schaftteil lediglich ein bis fünf, vorzugsweise ein bis drei, weiter bevorzugt ein bis zwei Windungen realisiert sind.

In Hinblick auf das Aneinanderfestlegen der Schaftteile gibt es unterschiedliche Möglichkeiten. So ist es denkbar, die Schaftteile, beispielsweise durch eine Außen-/ Innengewindekombination miteinander zu verschrauben, wobei die Gangrichtung einer derartigen Gewindekombination vorzugsweise unterschiedlich ist von der Gangrichtung der Außengewinde des Schraubenelementes. Ganz besonders bevorzugt ist eine Ausführungsform, bei der die beiden Schaftteile durch Verstemmen aneinander festgelegt sind. Dies kann beispielsweise dadurch realisiert werden, dass ein erstes, insbesondere endseitiges, Schaftteil auf einen Axialfortsatz des zweiten Schaftteils aufgeschoben ist, wobei der Axialfortsatz einen geringeren Durchmesser aufweist als die beiden Schaftteile. Durch Verstemmen des axial überstehenden Endes des Axialfortsatzes kann das erste Schaftteil gegen axiales Abziehen am zweiten Schaftteil gesichert werden. Bevorzugt sind die Schaftteile auch derart formschlüssig miteinander verbunden, dass ein Relatiwerdrehen in Umfangsrichtung vermieden wird. Hierzu ist der Axialfortsatz des zweiten Schaftteils weiter bevorzugt mit einer Mehrkammerkontur, insbesondere Sechskantkontur, oder einer Torx-Kontur versehen, wobei auch andere, insbesondere formkongruent ausgeformte, formschlüssige Verbindungen zwischen den Schaftteilen realisierbar sind.

Wie zuvor angedeutet, ist es besonders bevorzugt, wenn die beiden Schaftteile eine voneinander unterschiedliche Axialerstreckung und damit eine unterschiedliche Windungszahl aufweisen, wobei es weiter bevorzugt ist, wenn das erste, insbesondere endseitige, Schaftteil eine geringere Axialerstreckung aufweist als das zweite Schaftteil.

In Weiterbildung der Erfindung ist mit Vorteil vorgesehen, dass das Bremsmoment (Haltemoment, Sicherungsmoment) dadurch realisiert ist, dass ein Gewindegangauslauf des ersten, vorzugsweise endseitigen, Außengewindes derart relativ zu einem Gewindegangeinlauf des zweiten Außengewindes positioniert, insbesondere beabstandet, ist, dass ein Gewindesteigungssprung zwischen den Außengewinden realisiert ist. Anders ausgedrückt sind die beiden, vorzugsweise die gleiche Gewindesteigung aufweisenden, Außengewinde derart relativ positioniert, dass die Gewindegänge der Außengewinde nicht exakt in Gewindegangrichtung miteinander fluchten, so dass, sobald das zweite Außengewinde mit einem gemeinsamen Innengewindeelement in Wechselwirkung tritt, aufgrund der axialen Verspannung zwischen den Gewindegängen beim Einschrauben ein Bremsmoment resultiert. Bei einem nach dem Konzept der Erfindung ausgebildeten Schraubenelement kann diese Relativpositionierung unmittelbar beim Einbringen, insbesondere durch Rollieren, der Außengewinde realisiert werden, ohne dass es notwendig wäre, die Außengewinde nach deren Einbringen axial und/oder in Umfangsrichtung relativ zu verstellen, wobei auch eine derartige Ausführungsvariante des Verfahrens zur Herstellung eines nach dem Konzept der Erfindung ausgebildeten Schraubenelementes realisierbar ist. Über die Wahl der Größe des Axialversatzes und/oder des Versatzes des Gewindegangauslaufs des ersten Außengewindes zu dem Gewindegangeinlauf des zweiten Außengewindes kann die Größe des Bremsmomentes eingestellt werden.

Bevorzugt grenzen die Außengewinde in axialer Richtung nicht unmittelbar aneinander an, sondern es ist zwischen ihnen ein axialer Abstand realisiert, wobei dieser Axialabstand, genauer der Axialabstand des Gewindegangauslaufs des ersten Außengewindes von dem Gewindegangeinlauf des zweiten Außengewindes, nicht exakt der Gewindesteigung der Außengewinde und nicht exakt einem ganzzahligen Vielfachen der Gewindesteigung der Außengewinde entspricht. Bei der Gewindesteigung handelt es sich um den axialen Weg, mit dem ein Außengewinde bei einer ganzzahlingen Umdrehung des Schraubenelementes in ein Innengewindeelement verstellt wird.

Zusätzlich oder alternativ zu einer Axialpositionierung ist es bevorzugt, wenn der vorerwähnte Gewindegangauslauf des ersten Außengewindes in Umfangsrichtung zu dem Gewindegangeinlauf des zweiten Außengewindes versetzt ist. Anders ausgedrückt befinden sich die Umfangsmitten des Gewindegangauslaufs und des Gewindegangeinlaufs nicht auf demselben Umfangswinkel und/oder fluchten nicht in Richtung der Gewindegangerstreckung der Außengewinde.

Ganz besonders bevorzugt ist eine Ausführungsform des Schraubenelementes, bei der die beiden Außengewinde jeweils ein metrisches Außengewinde umfassen, wobei auch andere Gewindenormen realisierbar sind.

Wie eingangs bereits angedeutet, ist es besonders bevorzugt, wenn die Steigung und/oder die Gewindegröße und/oder die Gangrichtung der beiden Außengewinde gleich sind/ist. Besonders bevorzugt sind beide Außengewinde gleich ausgebildet, wobei sich die Außengewinde in ihrer Axialerstreckung unterscheiden können. Selbstverständlich ist auch eine Ausführungsform realisierbar, bei der sich die Außengewinde hinsichtlich mindestens eines Gewindeparameters, beispielsweise der Gewindesteigung, unterscheiden können. Bevorzugt ist es jedoch, die gleichen Außengewinde vorzusehen.

Wie zuvor bereits erläutert, ist es denkbar, die Außengewinde durch Relativverstellen so zu positionieren, dass das Bremsmoment resultiert. Bevorzugt ist es jedoch, wenn auf ein derartiges Relativverstellen bei der Produktion des Schraubenelementes verzichtet wird und die Außengewinde unmittelbar mit dem notwendigen Versatz in axialer Richtung und/oder Umfangsrichtung eingebracht werden. Dies kann beispielsweise mit Hilfe zweier unterschiedlicher Rollierwalzen oder mit Hilfe zweier unterschiedlicher Rollierwalzenabschnitte realisiert werden, wobei die Rollierwalzen bzw. Rollierwalzenabschnitte derart ausgeformt sind, dass zwischen den resultierenden Außengewinden ein Gewindesteigungssprung resultiert. Bevorzugt sind die Rollierwalzen bzw. Rollierwalzenabschnitte im Hinblick auf ihre Negativgewindekontur identisch, wobei die Gewindekonturen zur Erzeugung des gewünschten Gewindesteigungssprungs versetzt sind.

Ganz besonders bevorzugt ist eine Ausführungsvariante, bei der das erste Schaftteil derart festgelegt ist, dass es in axialer Richtung relativ zum zweiten Schaftteil verstellbar, jedoch nicht rotierbar, d.h. drehfest angeordnet ist. Ganz besonders bevorzugt ist es dabei, wenn das erste Schaftteil entgegen der Federkraft eines Federelementes axial relativ zum zweiten Schaftteil verstellbar ist. Bei einer derartigen Ausführungsform muss das erste Schaftteil nicht, was jedoch nicht zwingend ist, starr, d.h. nicht federelastisch ausgebildet sein, um eine Bremswirkung, d.h. ein Bremsmoment innerhalb einer Schraubenverbindung zu bewirken. Besonders zweckmäßig ist es, wenn das Federelement, entgegen dessen Federkraft das erste Schaftteil relativ zum zweiten Schaftteil, vorzugsweise auf das zweite Schaftteil zu, verstellbar ist, axial zwischen beiden Schaftteilen angeordnet ist, vorzugsweise derart, dass das Federelement das erste Schaftteil im nicht verschraubten Zustand des Schraubenelementes gegen einen Axialanschlag presst, der vorzugsweise durch Verstemmen eines Axialfortsatzes des zweiten Schaftteils hergestellt ist.

Im Hinblick auf die konkrete Ausbildung des Federelementes gibt es unterschiedliche Möglichkeiten. Besonders bevorzugt ist es, wenn das Federelement aus Metall ausgebildet ist. Bevorzugt handelt es sich bei dem Federelement um eine Tellerfeder. Es ist jedoch auch denkbar, das Federelement aus einem gummielastischen Material auszubilden, beispielsweise in Abhängigkeit der Größe des gewünschten Bremsmomentes.

Dadurch, dass das Federelement das erste Schaftteil in Einschraubrichtung federkraftbeaufschlagt, wird die Bremsmomentwirkung nicht aufgehoben, wenn das Schraubenelement in seinem bestimmungsgemäßen Einsatz auf Zug belastet wird. Das Federelement trägt dafür Sorge, dass die beiden Schaftteile in an entgegengesetzte Richtungen orientierten Innengewindeflanken eines mit dem Schraubenelement zusammenwirkenden Innengewindeelementes anliegt bzw. gegen diese gepresst wird.

Die Erfindung führt auch auf eine Schraubverbindung, umfassend ein wie zuvor beschrieben ausgebildetes Schraubenelement, das mit seinen beiden Außengewinden mit einem gemeinsamen Innengewindeelement verschraubt ist. Bevorzugt ist dabei zwischen beiden Außengewinden ein Gewindesteigungssprung realisiert, so dass es ab dem Moment des Einschraubens des zweiten Außengewindes in das Innengewindeelement zu axialen Verspannungen in den Gewindegängen kommt.

Darüber hinaus führt die Erfindung auch auf ein Verfahren zum Herstellen eines wie zuvor beschrieben ausgebildeten, mehrteiligen Schraubenelementes. Kern des Verfahrens ist es, dass die beiden Außengewinde derart relativ zueinander positioniert werden, dass beim gemeinsamen Verschrauben der beiden Außengewinde mit einem (gemeinsamen) Innengewindeelement ein Bremsmoment resultiert, wobei es besonders bevorzugt ist, wenn diese Relativpositionierung nicht durch ein axiales Relativpositionieren und/oder ein Relativpositionieren der Außengewinde in Umfangsrichtung erreicht wird, sondern die Außengewinde unmittelbar entsprechend relativpositioniert zueinander in die Schaftteile eingebracht werden. Dabei erfolgt das Einbringen der Außengewinde bevorzugt derart, dass zwischen den Außengewinden ein Gewindesteigungssprung realisiert ist.

Im Hinblick auf das Festlegen des ersten Schaftteils am zweiten Schaftteil gibt es unterschiedliche Möglichkeiten. Ganz besonders bevorzugt ist eine Ausführungsform des Verfahrens, bei der das erste Schaftteil, ohne separate Befestigungsteile vorsehen zu müssen, am zweiten Schaftteil festgelegt wird. Dies kann beispielsweise dadurch realisiert werden, dass das erste, eine zentrische Durchgangsöffnung aufweisende Schaftteil über einen Axialfortsatz des zweiten Schaftteils geschoben und dann durch Verstemmen des überstehenden Endes des Axialfortsatzes am zweiten Schaftteil fixiert wird. Bevorzugt wird ein Verdrehen des ersten Schaftteils auf dem Axialfortsatz durch die Realisierung eines entsprechenden Formschlusses vermieden, insbesondere dadurch, dass die Axialkontur und/oder eine Mehrkantkontur, insbesondere eine Sechskantkontur, aufweist und der Innenumfang der Durchgangsbohrung im ersten Schaftteil entsprechend formkongruent ausgeformt ist. Ganz besonders bevorzugt ist es, wenn die Außengewinde in die Schaftteile erst nach dem Fixieren des ersten Schaftteils am zweiten Schaftteil eingebracht, insbesondere einrolliert, werden. Besonders bevorzugt ist es dabei, wenn ein das zweite Schaftteil mit Axialfortsatz aufweisender Rohling durch einen Umformvorgang, vorzugsweise durch Pressen, ganz besonders bevorzugt durch Kaltfließpressen, hergestellt ist.

Besonders bevorzugt ist eine Ausführungsform, bei der die Schaftteile derart aneinander fixiert sind, dass sie stirnseitig nicht vollflächig aneinander anliegen, sondern dass zwischen den Außengewinden ein Axialabstand verbleibt.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1: in einer schematischen Darstellung ein mögliches Ausführungsbeispiel eines zweiteiligen Schraubenelementes mit zwei jeweils ein Außengewinde aufweisenden Schaftteilen, wobei die Außengewinde derart relativ zueinander positioniert sind, dass beim Verschrauben beider Außengewinde mit einem gemeinsamen Innengewindeelement ein Bremsmoment resultiert,
- Fig. 2 bis Fig. 5: zeitlich aufeinanderfolgende Verfahrensschritte bei der Herstellung eines Schraubenelementes und
- Fig. 6:: eine Schraubverbindung, umfassend ein Schraubelement sowie ein Innengewindeelement, und
- Fig. 7a und 7b:: eine alternative Ausführungsvariante mit einem axial zwischen den Schaftteilen angeordneten Federelement.

In den Figuren sind gleiche Elemente und Elemente mit der gleichen Funktion mit den gleichen Bezugszeichen gekennzeichnet.

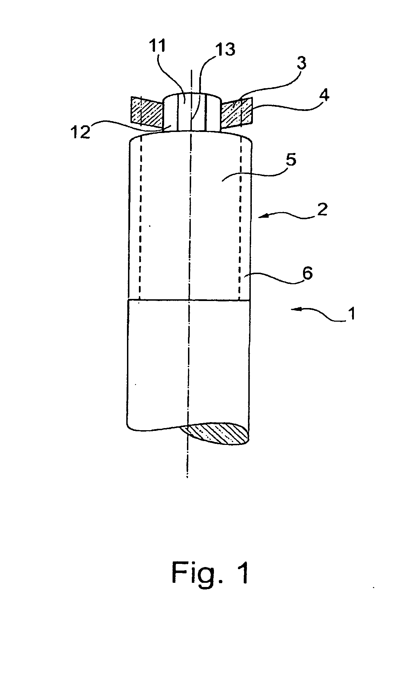

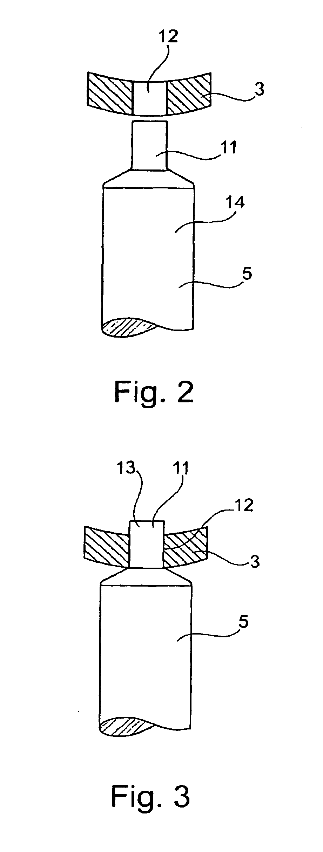

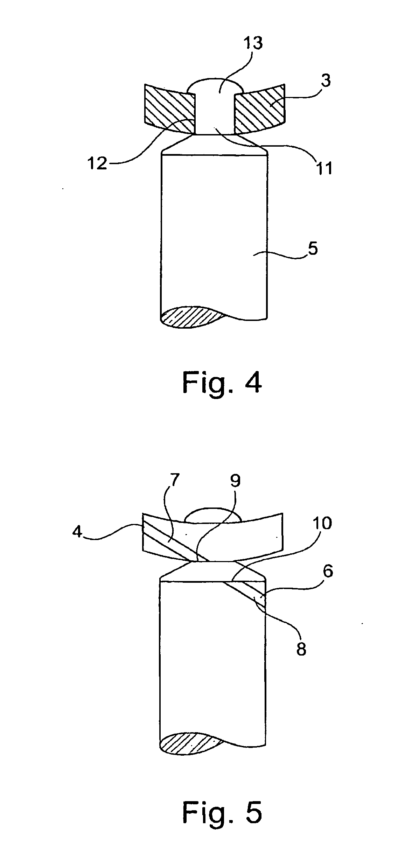

Zunächst wird im Folgenden anhand der Fig. 1 und 5 ein mehrteiliges, hier zweiteiliges, Schraubenelement 1 beschrieben, das mit einem später anhand der Fig. 2 bis 5 zu erläuternden Herstellungsverfahren herstellbar ist.

In den Fig. 1 und 5 ist ausschnittsweise ein Schraubenelement 1 gezeigt. Das Schraubenelement 1 umfasst einen zweiteiligen Schaft 2, welcher wiederum aus einem endseitigen, ersten Schaftteil 3 mit einem ersten Außengewinde 4 und einem axial benachbarten zweiten Schaftteil 5 mit einem zweiten Außengewinde 6 besteht. Die beiden Außengewinde 4, 6 unterscheiden sich lediglich hinsichtlich ihrer Axialerstreckung, d.h. sie sind ansonsten identisch, weisen also die gleiche Gangrichtung, die gleiche Steigung sowie die gleiche Gewindegröße auf. In Fig. 5 sind die Außengewinde 4, 6 in einer alternativen - technisch nicht üblichen - Darstellungsweise gezeigt. Zu erkennen ist ausschnittsweise ein erster Gewindegang 7 des ersten Außengewindes 4 sowie ein zweiter Gewindegang 8 des zweiten Außengewindes 6. Die beiden Außengewinde 4, 6 sind derart relativ zueinander positioniert, dass zwischen den Außengewinden 4, 6 ein Gewindesteigungssprung realisiert ist, was bedeutet, dass die Gewindegänge 7, 8 der Außengewinde 4, 6 in Gewindegangrichtung nicht exakt miteinander fluchten. In dem gezeigten Ausführungsbeispiel ist ein Gewindegangauslauf 9 des ersten Gewindegangs 7 des ersten Außengewindes 4 sowohl axial als auch in Umfangsrichtung versetzt zu einem Gewindegangeinlauf 10 des zweiten Gewindegangs 8 des zweiten Außengewindes 6. Beim Verschrauben beider Außengewinde 4, 6 mit einem gemeinsamen, nicht dargestellten Innengewindelement resultiert ein Bremsmoment. Ohne den vorerwähnten Gewindesteigungssprung würde der zweite Gewindegang 8 wie strichliert angedeutet verlaufen, also in Gewindegangrichtung mit dem ersten Gewindegang 7 fluchten - in diesem Fall würde nicht das gewünschte Bremsmoment (Sicherungsmoment, Haltemoment) resultieren. Wie sich aus Fig. 5 ergibt, ist die Umfangsmitte des zweiten Gewindegangs 8 (Vollstrichdarstellung) in Umfangsrichtung beabstandet von der strichlierten Darstellung des zweiten Gewindegangs 8. Der strichliert dargestellte Verlauf des zweiten Gewindegangs 8 würde sich bei einem Schraubenelement wiederfinden, bei dem keine Sicherungsfunktion (Bremsmoment) realisiert wäre.

Die in Fig. 5 sehr deutlich werdende, versetzte Relativposition der Außengewinde 4, 6 wurde unmittelbar durch ein entsprechendes Einbringen, hier Rollieren der Außengewinde 4, 6 realisiert - nicht im Nachhinein durch ein axiales Verstellen des ersten Schaftteils 3 relativ zu dem zweiten Schaftteil 5 oder durch ein Tordieren der Schaftteile 3, 5 relativ zueinander in Umfangsrichtung.

Wie sich aus den Darstellungen gemäß den Fig. 1 und 5 ergibt, unterscheiden sich die Schaftteile 3, 5 sowie die Außengewinde 4, 6 hinsichtlich ihrer Axialerstreckung und damit hinsichtlich der Windungszahl. Zu erkennen ist, dass das erste, wesentlich kürzere Schaftteil 3 eine viel geringere Anzahl von Windungen aufweisen kann als das zweite Schaftteil 5.

Wie sich ferner aus den Fig. 1 und 5 ergibt, ist das erste Schaftteil 3 - was nicht zwingend notwendig ist - in der Art einer Tellerfeder, d.h. schalenartig, gekrümmt ausgebildet, um die Federwirkung des ersten Schaftteils 3 in axialer Richtung zu verbessern, wodurch sich eine optimale Verspannung der Außengewinde 4, 6 in einem nicht dargestellten gemeinsamen Innengewinde ergibt. Es ist jedoch auch eine zylindrische Ausformung des ersten Schaftteils 3 realisierbar.

Ferner ergibt sich aus den Fig. 1 und 5, dass das erste Schaftteil 3 ohne weitere separate Befestigungsmittel am zweiten Schaftteil 5 festgelegt ist. Das zweite Schaftteil 5 weist einen endseitigen Axialfortsatz 11 auf, der eine zentrische Durchgangsöffnung 12 des ersten Schaftteils 3 durchsetzt. Das axial vordere Ende 13 dieses Axialfortsatzes 11 ist verstemmt und überragt die Durchgangsöffnung 12 in radialer Richtung und sichert so das erste Schaftteil 3 gegen axiales Verstellen. Trotz der Fixierung ist das erste Schaftteil 3 in einem radial äußeren Bereich elastisch relativ zu dem zweiten Schaftteil 5 auslenkbar.

Um ein relatives Verdrehen der Schaftteile 3, 5 relativ zueinander zu verhindern, ist der Axialfortsatz 11 in der Art eines Torx-Antriebs konturiert, wobei die Durchgangsöffnung 12 formkongruent ausgeformt ist, wodurch ein Formschluss in Umfangsrichtung erzielt wird.

Anhand der Fig. 2 bis 5 wird im Folgenden ein bevorzugtes Herstellungsverfahren zum Herstellen des in den Fig. 1 und 5 dargestellten Schraubenelementes beschrieben.

In Fig. 2 sind die beiden Schaftteile 3, 5 vor dem Aneinanderfestlegen und vor dem Einbringen von Außengewinden dargestellt. Bevorzugt sind beide Schaftteile 3, 5, zumindest jedoch das zweite Schaftteil 5, durch einen Umformvorgang hergestellt. Das zweite Schaftteil 5 kann beispielsweise in der Art einer Stiftschraube oder mit einem Schraubenkopf zur Bildung einer Kopfschraube hergestellt sein.

Der das zweite Schaftteil 5 aufweisende Rohling 14 weist einen Axialfortsatz 11 auf, auf den das erste Schaftteil 3 mit Hilfe einer zentrischen Durchgangsöffnung 12 aufschiebbar ist.

In Fig. 3 ist das erste Schaftteil 3 in der aufgeschobenen Position dargestellt. Zu erkennen ist, dass der Axialfortsatz 11 die Durchgangsöffnung 12 durchsetzt und die vordere Stirnfläche des ersten Schaftteils 3 überragt.

In einem weiteren Verfahrensschritt wird nun das vordere Ende 13 des Axialfortsatzes 11 verstemmt, derart, dass es das erste Schaftteil 3 gegen Verlieren in axialer Richtung sichert. Ein Relatiwerdrehen der Schaftteile 3, 5 relativ zueinander wird durch eine entsprechend formkongruente Ausbildung des Axialfortsatzes 11 und der Durchgangsöffnung 12 erreicht, wobei es weiter bevorzugt ist, den Axialfortsatz 11 mehrkantig auszuformen.

In dem in Fig. 4 dargestellten, aneinander fixierten Zustand der Schaftteile 3, 5 wird in das erste Schaftteil 3 das erste Außengewinde 4 (vgl. Fig. 5) und in das zweite Schaftteil 5 das zweite Außengewinde 6 eingebracht, vgl. auch Fig. 5.

Bei der dargestellten bevorzugten Vorgehensweise werden die Außengewinde 4, 6 derart relativ positioniert zueinander in die Schaftteile 3, 5 rolliert, dass sich der in Fig. 5 dargestellte Versatz ergibt, bei dem die Gewindegänge 7, 8 der Außengewinde 4, 6 nicht in Gewindegangrichtung exakt miteinander fluchten, um somit beim Verschrauben des Schraubenelementes 1 mit einem Innengewindeelement die gewünschte Verspannung und damit das gewünschte Bremsmoment (Haltemoment, Sicherungsmoment) zu bewirken. Zusätzlich oder alternativ zu einem derartig versetzten Eindringen der Außengewinde 4, 6 ist es möglich, die Außengewinde 4, 6 nach dem Einbringen relativ zueinander (axial) und/oder in Umfangsrichtung zu verstellen.

Das versetzte Einrollieren wird bevorzugt mit zwei zueinander versetzt ausgebildeten Rollierwalzenabschnitten oder zwei versetzt zueinander angeordneten Rollierwalzen durchgeführt.

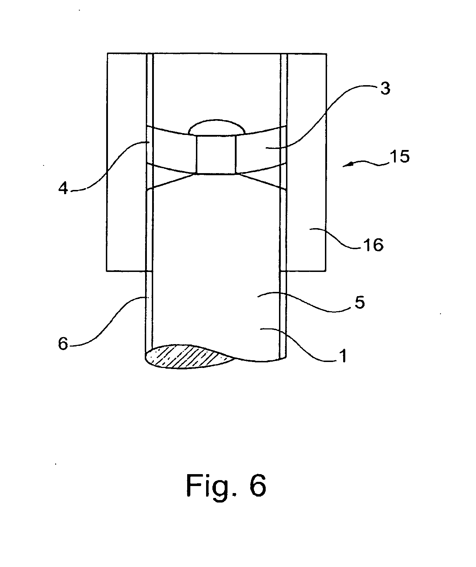

Fig. 6 zeigt eine Schraubverbindung 15, bei der ein lediglich schematisch angedeutetes, vorzugsweise wie in den Fig. 1 und 5 dargestelltes Schraubenelement 1 mit einem gemeinsamen Innengewindeelement 16 verschraubt ist.

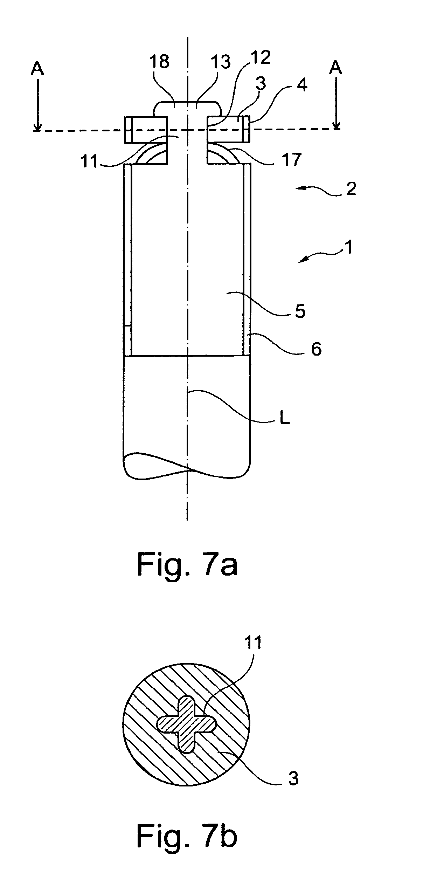

In den Fig. 7a und 7b ist ein alternatives Schraubenelement 1 gezeigt. Das Schraubenelement 1 umfasst einen zweiteiligen Schaft 2, welcher aus einem endseitigen, ersten Schaftteil 3, aufweisend ein erstes Außengewinde 4 und einem axial benachbarten zweiten Schaftteil 5, aufweisend ein zweites Außengewinde 6 besteht. Die beiden Außengewinde 4, 6 unterscheiden sich lediglich hinsichtlich ihrer Axialerstreckung - ansonsten sind sie identisch, weisen also die gleiche Gangrichtung, die gleiche Steigung sowie die gleiche Gewindegröße auf. Bevorzugt sind die Außengewinde 4, 6 in dem dargestellten, nicht verschraubten Zustand des Schraubenelementes analog zu dem Ausführungsbeispiel gemäß Fig. 5 (vgl. zugehörige Figurenbeschreibung) relativ zueinander positioniert. Bei Bedarf kann auch die Axialerstreckung der Außengewinde 4, 6 gleich gewählt werden.

Wie sich aus Fig. 7a ergibt, ist das erste Schaftteil 3 am zweiten Schaftteil 5 festgelegt, d.h. unverlierbar gehalten. Dabei ist das erste Schaftteil 3 derart festgelegt, dass es axial relativ zu dem zweiten Schaftteil 5 entlang der Längsmittelachse L des Schraubenelementes 1 verstellbar ist und zwar entgegen der Federkraft eines Federelementes 17, welches im gezeigten Ausführungsbeispiel als Tellerfeder ausgebildet und axial zwischen den beiden Schaftteilen 3, 4 angeordnet ist.

Das erste Schaftteil 3 bzw. dessen Durchgangsöffnung 12 ist axial durchsetzt von einem Axialfortsatz 11 des zweiten Schaftteils 5, wobei der Axialfortsatz 11 einen (wesentlich) geringeren Durchmesser aufweist als das zweite Außengewinde 6. Der Axialfortsatz 11 bzw. dessen Querschnittskontur ist in der Schnittdarstellung gemäß Fig. 7 gezeigt, die eine Schnittansicht des Schraubenelementes 1 entlang der Schnittlinie A - A gemäß Fig. 7a zeigt. Zu erkennen ist, dass der Axialfortsatz kreuzförmig konturiert ist, so dass das erste Schaftteil 2 drehfest, jedoch axial verschieblich entlang des Axialfortsatzes 11 relativ zum zweiten Schaftteil 2 verstellbar ist. Alternativ kann der Axialfortsatz 11 beispielsweise eine Torxform, eine Vierkant-, Sechskant- oder andere Mehrkantformen aufweisen.

In dem in Fig. 7a gezeigten, nicht verschraubten Zustand des Schraubenelementes 1 liegt das erste Schaffteil 3 axial an einem (vorderen) Axialanschlag 18 an, der durch Verstemmen des vorderen Endes 13 des Axialfortsatzes 11 gebildet ist. Der Axialfortsatz 18 überragt den Umfangsrand der Durchgangsöffnung 12 in radialer Richtung nach außen. In dieser Ausgangsposition sind die Außengewinde 4, 6 bevorzugt wie in Fig. 5 gezeigt relativ zueinander positioniert. Beim Einschrauben des Schraubenelementes 1 in ein Innengewindeelement wird das erste Schaftteil 3 aufgrund der Relativpositionierungen der Außengewinde 4, 6 entgegen der Federkraft des Federelementes 17 axial entgegen der Einschraubrichtung bewegt - das Federelement 17 wird dabei elastisch komprimiert und ist bestrebt, dass sich die Ursprungsposition wieder einstellt, mit der Folge, dass das Federelement 17 das erste Schaftteil 3 in Einschraubrichtung beaufschlagt, d.h. in eine Richtung von dem zweiten Außengewinde 6 weg in Richtung auf den Anschlag 18 hin.

In dem gezeigten Ausführungsbeispiel handelt es sich bei dem ersten Schaftteil 3 um ein im Vergleich zu dem Ausführungsbeispiel gemäß Fig. 1 starres, d.h. im Wesentlichen nicht elastisches Bauteil. Die Bremswirkung wird aufgrund des Vorsehens des Federelementes 17 realisiert. Bei Bedarf kann jedoch als erstes Schaftteil 3 auch ein federndes Element, analog zu Fig. 1, vorgesehen werden. Die gezeigte Ausführungsform ist jedoch bevorzugt, da das erste Schaftteil 3 im Wesentlichen eine einfache Zylinderkontur aufweist und insofern einfacher fertigbar ist.

Alternativ zu dem gezeigten, als Tellerfederelement ausgebildeten, metallischen Federelement 17 kann auch ein Federelement aus einem Polymermaterial eingesetzt werden. Wesentlich ist lediglich, dass eine ausreichende axiale Federkraft bestrebt ist, die beiden Außengewinde 4, 6 voneinander weg zu bewegen.

### Bezugszeichenliste

- 1: Schraubenelement
- 2: Schaft
- 3: erstes Schaftteil
- 4: erstes Außengewinde
- 5: zweites Schaftteil
- 6: zweites Außengewinde
- 7: Gewindegang
- 8: Gewindegang
- 9: Gewindegangauslauf
- 10: Gewindegangeinlauf
- 11: Axialfortsatz
- 12: Durchgangsöffnung
- 13: vorderes Ende
- 14: Rohling
- 15: Schraubverbindung
- 16: Innengewindeelement
- 17: Federelemente
- 18: Axialanschlag

- L: Längsmittelachse

## Patentansprüche

1. Schraubenelement mit einem Schaft (2), mit einem ersten Außengewinde (4) und mit einem zweiten Außengewinde (6), wobei der Schaft (2) mehrteilig ausgebildet und aus mehreren Schaftteilen, umfassend einen ersten Schaftteil (3) und einen zweiten Schaftteil (5), zusammengesetzt ist, die aneinander festgelegt sind, und wobei das erste Außengewinde (4) an dem ersten Schaftteil (3) und das zweite Außengewinde (6) an dem zweiten Schaftteil (5) ausgebildet ist, und wobei das erste Außengewinde (4) derart relativ zu dem zweiten Außengewinde (6) positioniert ist, dass beim gemeinsamen Verschrauben der beiden Außengewinde (4, 6) mit einem Innengewindeelement (16) ein Bremsmoment resultiert.

2. Schraubenelement nach Anspruch 1,
**dadurch gekennzeichnet,**
**dass** das Schraubenelement (1) als Kopfschraube oder Stiftschraube ausgebildet ist.

3. Schraubenelement nach einem der Ansprüche 1 oder 2,
**dadurch gekennzeichnet,**
**dass** die Schaftteile (3, 5) derart aneinander festgelegt sind, dass das erste Schaftteil (3) relativ zu dem zweiten Schaftteil (5) elastisch auslenkbar ist.

4. Schraubenelement nach einem der vorhergehenden Ansprüche,
**dadurch gekennzeichnet,**
**dass** die Schaftteile (3, 5) eine voneinander unterschiedliche Axialerstreckung aufweisen, vorzugsweise derart, dass der, insbesondere endseitige, erste Schaftteil (3) eine geringere Axialerstreckung aufweist als der zweite Schaftteil (5).

5. Schraubenelement nach einem der vorhergehenden Ansprüche,
**dadurch gekennzeichnet,**
**dass** ein Gewindegangauslauf (9) des ersten Außengewindes (4) derart von einem Gewindegangeinlauf (10) des zweiten Außengewindes (6) beabstandet ist, dass ein Gewindesteigungssprung zwischen den Außengewinden (4, 6) realisiert ist.

6. Schraubenelement nach einem der vorhergehenden Ansprüche,
**dadurch gekennzeichnet,**
**dass** ein Gewindegangauslauf (9) des ersten Außengewindes (4) axial von einem Gewindegangeinlauf (10) des zweiten Außengewindes (6) beabstandet ist.

7. Schraubenelement nach einem der vorhergehenden Ansprüche,
**dadurch gekennzeichnet,**
**dass** ein Gewindegangauslauf (9) des ersten Außengewindes (3) in Umfangsrichtung zu einem Gewindegangeinlauf (10) des zweiten Außengewindes (6) versetzt ist.

8. Schraubenelement nach einem der Ansprüche 6 oder 7,
**dadurch gekennzeichnet,**
**dass** der axiale Abstand zwischen dem Gewindegangauslauf (9) des ersten Außengewindes (4) von dem Gewindegangeinlauf (10) des zweiten Außengewindes (6) größer oder kleiner ist als die Gewindesteigung des ersten und des zweiten Außengewindes (4, 6), oder größer oder kleiner ist als ein ganzzahliges Velfaches der Gewindesteigung des ersten und des zweiten Außengewindes (4, 6).

9. Schraubenelement nach einem der vorhergehenden Ansprüche,
**dadurch gekennzeichnet,**
**dass** das erste Schaftteil (3) axial relativ zu dem zweiten Schaftteil (5) verstellbar sowie drehfest an dem zweiten Schaftteil (5) festgelegt ist.

10. Schraubenelement nach Anspruch 9,
**dadurch gekennzeichnet,**
**dass** ein das erste und/oder das zweite Schaftteil (3, 5) federkraftbeauf schlagendes Federelement (17) vorgesehen ist.

11. Schraubenelement nach Anspruch 10,
**dadurch gekennzeichnet,**
**dass** das Federelement (17) axial zwischen dem ersten und dem zweiten Schaftteil (3, 5), das erste Schaftteil (3) von dem zweiten Schaftteil (5) weg gegen einen Axialanschlag (18) federkraftbeaufschlagend angeordnet ist.

12. Schraubverbindung umfassend ein Schraubenelement (1) nach einem der vorhergehenden Ansprüche und ein Innengewindeelement (16), wobei der erste und der zweite Schaftteil (3, 5) des Schraubenelementes (1) mit dem Innengewindeelement (16) verschraubt sind.

13. Verfahren zum Herstellen eines Schraubenelementes (1) nach einem der Ansprüche 1 bis 11,
**dadurch gekennzeichnet,**
**dass** in einen ersten Schaftteil (3) ein erstes Außengewinde (4) eingebracht und in einen zweiten Schaftteil (5) ein zweites Außengewinde (6) eingebracht werden und dass das erste und das zweite Außengewinde (4, 6) derart relativ zueinander positioniert werden, dass beim gemeinsamen Verschrauben der beiden Außengewinde (4, 6) mit einem Innengewindeelement (16) ein Bremsmoment resultiert.

14. Verfahren nach Anspruch 13,
**dadurch gekennzeichnet,**
**dass** die Außengewinde (4, 6) derart in die Schaftteile (3, 5) eingebracht, insbesondere rolliert werden, dass ein Gewindesteigungssprung zwischen den Außengewinden (4, 6) resultiert.

15. Verfahren nach einem der Ansprüche 13 oder 14,
**dadurch gekennzeichnet**
**dass** das Einbringen der Außengewinde (4, 6) mit Hilfe zweier Rollierwalzenabschnitte einer Rollierwalze oder mit Hilfe zweier Rollierwafzen erfolgt, wobei die Rollierwalzen bzw. die Rollierwalzenabschnitte derart ausgebildet sind, dass durch Rollieren der Gewinde ein Gewindesteigungssprung zwischen den Außengewinden (4, 6) resultiert.

## Claims

1. A screw element having a shaft (2), having a first external thread (4) and having a second external thread (6), wherein the shaft (2) is a multi-part design and is composed of a plurality of shaft parts, comprising a first shaft part (3) and a second shaft part (5) that are fixed to each other, and wherein the first external thread (4) is formed on the first shaft part (3) and the second external thread (6) is formed on the second shaft part (5), and wherein the first external thread (4) is positioned relative to the second external thread (6) in such a manner that jointly screwing the two external threads (4, 6) into an internal thread element (16) results in a braking torque.

2. The screw element according to claim 1,
**characterized in**
**that** the screw element (1) is formed as a head screw or a stud.

3. The screw element according to any one of the claims 1 or 2,
**characterized in**
**that** the shaft parts (3, 5) are fixed to each other in such a manner that the first shaft part (3) can be elastically deflected relative to the second shaft part (5) .

4. The screw element according to any one of the preceding claims,
**characterized in**
**that** the shaft parts (3, 5) have axial extents that differ from each other, preferably in such a manner that the first shaft part (3), in particular on the end side, has a shorter axial extent than the second shaft part (5).

5. The screw element according to any one of the preceding claims,
**characterized in**
**that** a thread turn end (9) of the first external thread (4) is spaced apart from a thread turn lead-in (10) of the second external thread (6) in such a manner that a thread pitch jump is implemented between the external threads (4, 6).

6. The screw element according to any one of the preceding claims,
**characterized in**
**that** a thread turn end (9) of the first external thread (4) is axially spaced apart from a thread turn lead-in (10) of the second external thread (6).

7. The screw element according to any one of the preceding claims,
**characterized in**
**that** a thread turn end (9) of the first external thread (4) is offset in the circumferential direction relative to a thread turn lead-in (10) of the second external thread (6).

8. The screw element according to any one of the claims 6 or 7,
**characterized in**
**that** the axial distance between the thread turn end (9) of the first external thread (4) from the thread turn lead-in (10) of the second external thread (6) is greater or less than the thread pitch of the first and the second external threads (4, 6), or is greater or less than an integral multiple of the thread pitch of the first and the second external thread (4, 6).

9. The screw element according to any one of the preceding claims,
**characterized in**
**that** the first shaft part (3) is axially adjustable relative to the second shaft part (5) and is fixed in a non-rotatable manner on the second shaft part (5).

10. The screw element according to claim 9,
**characterized in**
**that** a spring element (17) is provided that acts by a spring load on the first and/or the second shaft parts (3, 5).

11. The screw element according to claim 10,
**characterized in**
**that** the spring element (17) is arranged axially between the first and the second shaft parts (3, 5) such that it acts by spring force on the first shaft part (3) pressing the latter away from the second shaft part (5) and against an axial stop (18).

12. A screw connection, comprising a screw element (1) according to any one of the preceding claims, and an internal thread element (16), wherein the first and the second shaft parts (3, 5) of the screw element (1) are screwed together with the internal thread element (16).

13. A method for producing a screw element (1) according to any one of the claims 1 to 11,
**characterized in**
**that** a first external thread (4) is formed on a first shaft part (3) and a second external thread (6) is formed on a second shaft part (5), and that the first and the second external threads (4, 6) are positioned relative to each other in such a manner that jointly screwing the two external threads (4, 6) into an internal thread element (16) results in a braking torque.

14. The method according to claim 13,
**characterized in**
**that** the external threads (4, 6) are formed, in particular rolled, on the shaft parts (3, 5) in such a manner that this results in a thread turn jump between the external threads (4, 6).

15. The method according to any one of claims 13 or 14,
**characterized in**
**that** forming the external threads (4, 6) is carried out by means of two rolling cylinder sections of a rolling cylinder, or by means of two rolling cylinders, wherein the rolling cylinders and/or the rolling cylinder sections are formed in such a manner that rolling the threads results in a thread pitch jump between the external threads (4, 6).

## Revendications

1. Élément fileté doté d'une tige (2) comprenant un premier filetage extérieur (4) et comprenant un deuxième filetage extérieur (6), la tige (2) étant réalisée en plusieurs parties et étant composée de plusieurs parties de tige, comportant une première partie de tige (3) et une deuxième partie de tige (5), qui sont fixées les unes aux autres, et le premier filetage extérieur (4) étant réalisé sur la première partie de tige (3) et le deuxième filetage extérieur (6) étant réalisé sur la deuxième partie de tige (5), et le premier filetage extérieur (4) étant positionné par rapport au deuxième filetage extérieur (6) de telle sorte que, lorsque les deux filetages extérieurs (4, 6) sont vissés conjointement sur un élément à filetage intérieur (16), il en résulte un couple de freinage.

2. Élément fileté selon la revendication 1, **caractérisé en ce que** l'élément fileté (1) est réalisé sous forme de vis à tête ou sous forme de goujon fileté.

3. Élément fileté selon la revendication 1 ou 2, **caractérisé en ce que** les parties de tige (3, 5) sont fixées l'une à l'autre de telle sorte que la première partie de tige (3) puisse être déviée élastiquement par rapport à la deuxième partie de tige (5).

4. Élément fileté selon l'une quelconque des revendications précédentes, **caractérisé en ce que** les parties de tige (3, 5) présentent une étendue axiale différente l'une de l'autre, de préférence de telle sorte que la première partie de tige (3), en particulier située à une extrémité, présente une étendue axiale plus petite que la deuxième partie de tige (5).

5. Élément fileté selon l'une quelconque des revendications précédentes, **caractérisé en ce qu'**une sortie de filet (9) du premier filetage extérieur (4) est espacée d'une entrée de filet (10) du deuxième filetage extérieur (6) de telle sorte qu'un saut de pas de filetage soit réalisé entre les filetages extérieurs (4, 6).

6. Élément fileté selon l'une quelconque des revendications précédentes, **caractérisé en ce qu'**une sortie de filet (9) du premier filetage extérieur (4) est espacée axialement d'une entrée de filet (10) du deuxième filetage extérieur (6).

7. Élément fileté selon l'une quelconque des revendications précédentes, **caractérisé en ce qu'**une sortie de filet (9) du premier filetage extérieur (3) est décalée par rapport à une entrée de filet (10) du deuxième filetage extérieur (6) dans la direction périphérique.

8. Élément fileté selon la revendication 6 ou 7, **caractérisé en ce que** la distance axiale entre la sortie de filet (9) du premier filetage extérieur (4) et l'entrée de filet (10) du deuxième filetage extérieur (6) est supérieure ou inférieure au pas de filetage du premier et du deuxième filetage extérieur (4, 6) ou supérieure ou inférieure à un multiple entier du pas de filetage du premier et du deuxième filetage extérieur (4, 6).

9. Élément fileté selon l'une quelconque des revendications précédentes, **caractérisé en ce que** la première partie de tige (3) est fixée sur la deuxième partie de tige (5) de manière déplaçable axialement par rapport à la deuxième partie de tige (5) ainsi que de manière solidaire en rotation.

10. Élément fileté selon la revendication 9, **caractérisé en ce qu'**il est prévu un élément ressort (17) sollicitant par une force de ressort la première et/ou la deuxième partie de tige (3, 5) .

11. Élément fileté selon la revendication 10, ¹ **caractérisé en ce que** l'élément ressort (17) est disposé axialement entre la première et la deuxième partie de tige (3, 5), de manière à solliciter par une force de ressort la première partie de tige (3) contre une butée axiale (18), à l'écart de la deuxième partie de tige (5).

12. Connexion filetée comportant un élément fileté (1) selon l'une quelconque des revendications précédentes et un élément à filetage intérieur (16), la première et la deuxième partie de tige (3, 5) de l'élément fileté (1) étant vissées sur l'élément à filetage intérieur (16).

13. Procédé de fabrication d'un élément fileté (1) selon l'une quelconque des revendications 1 à 11, **caractérisé en ce qu'**un premier filetage extérieur (4) est ménagé dans une première partie de tige (3) et un deuxième filetage extérieur (6) est ménagé dans une deuxième partie de tige (5), et **en ce que** le premier et le deuxième filetage extérieur (4, 6) sont positionnés l'un par rapport à l'autre de telle sorte que, lorsque les deux filetages extérieurs (4, 6) sont vissés conjointement sur un élément à filetage intérieur (16), il en résulte un couple de freinage.

14. Procédé selon la revendication 13, **caractérisé en ce que** les filetages extérieurs (4, 6) sont ménagés dans les parties de tige (3, 5), en particulier roulés, de telle sorte qu'il en résulte un saut de pas de filetage entre les filetages extérieurs (4, 6).

15. Procédé selon la revendication 13 ou 14, **caractérisé en ce que** les filetages extérieurs (4, 6) sont ménagés à l'aide de deux sections de cylindre de roulage d'un cylindre de roulage ou à l'aide de deux cylindres de roulage, les cylindres de roulage ou les sections de cylindre de roulage étant réalisé(e)s de telle sorte qu'un saut de pas de filetage entre les filetages extérieurs (4, 6) résulte du roulage des filetages.
